# EUROPÄISCHE PATENTSCHRIFT

(11) **EP 2 478 995 B1**
(45) Veröffentlichungstag und Bekanntmachung des Hinweises auf die Patenterteilung: **21.08.2013**
(21) Anmeldenummer: 11151648.0
(22) Anmeldetag: 21.01.2011
(51) Int. Cl.: B23Q 1/38, B23Q 1/58, F16C 29/02

(54) **Vorrichtung mit einem verfahrbaren Schlitten und einer Linearführung**
Device with a moveable carriage and a linear guide
Dispositif doté d'un chariot déplaçable et d'un guidage linéaire

(43) Veröffentlichungstag der Anmeldung: 25.07.2012
(73) Patentinhaber: Fritz Studer AG, 3612 Steffisburg (CH)
(72) Erfinder: Aeschlimann, Adrian, 3626 Hünibach (CH); Senn, Andreas, 3250 Lyss (CH); Zwahlen, Reto, 3612 Steffisburg (CH)
(74) Vertreter: AMMANN PATENTANWÄLTE AG BERN

(56) Entgegenhaltungen:
- EP-A1- 0 536 494
- CH-A5- 675 220
- DE-A1- 3 131 566
- US-A- 4 272 216

## Beschreibung

Die vorliegende Erfindung bezieht sich auf eine Vorrichtung mit einem verfahrbaren Schlitten und einer Linearführung.

Es sind Linearführungen bekannt, die hydrostatisch arbeiten. Zu diesem Zweck sind Taschen vorgesehen, in welchen ein Schmiermittel unter Druck aufnehmbar ist. Es wurde festgestellt, dass derartige Führungen anfällig auf Störeinflüsse sind, so dass der Schlitten schwierig in einer bestimmten Position gehalten wird. Wird beispielsweise der Schlitten eingesetzt zur Bearbeitung eines Werkstücks, so können z. B. bereits geringe Bodenvibrationen dazu führen, dass das Halten des Schlittens an einer bestimmten Position erschwert und dadurch eine genaue Bearbeitung verhindert wird. Zudem ist die erreichbare Bahngenauigkeit bei langen Führungen beschränkt.

In der DE 31 31 566 A1 ist eine Linearführung beschrieben. Diese umfasst eine hydrodynamische Führungsschiene und eine hydrostatische Führungsschiene, welche gegenüberliegend zur hydrodynamischen Führungsschiene angeordnet ist und somit diese belastet. Der Aufbau der Führungsschienen ist nicht im Detail erläutert.

EP-0536434 offenbart eine Vorrichtung nach dem Oberbegriff des Anspruchs 1.

Es ist eine Aufgabe der vorliegenden Erfindung, eine Vorrichtung der eingangs erwähnten Art zu schaffen, deren Schlitten in verbessertem Masse präzise verfahrbar und positionierbar ist.

Eine Vorrichtung, die diese Aufgabe löst, ist im Anspruch 1 angegeben. Die weiteren Ansprüche geben bevorzugte Ausführungen, eine Schleifmaschine sowie eine Verwendung zur Bearbeitung eines Werkstücks an.

Die erfindungsgemässe Vorrichtung umfasst einen verfahrbaren Schlitten mit mindestens einer Tasche auf, in welcher Schmiermittel unter Druck aufnehmbar ist, und einen inselförmigen Belag zur Erzeugung einer auf den Schlitten wirkenden Reibungskraft. Dadurch ist es möglich, eine hydrodynamische Gleitführung bereitzustellen, deren Reibung durch die hydrostatische Entlastung einstellbar ist. Der Schlitten ist mit dieser Art der Führung präzise verfahrbar und positionierbar.

Die Erfindung wird im Folgenden anhand eines Ausführungsbeispiels unter Bezugnahme auf Figuren erläutert. Es zeigen
Fig. 1 eine perspektivische Ansicht einer erfindungsgemässen Vorrichtung mit zwei Zustellachsen X und Z;
Fig. 2 einen Schlitten der Vorrichtung aus Fig. 1 in einer Unteransicht;
Fig. 3 eine Detailansicht aus Fig. 2;
Fig. 4 einen Teil der Linearführung aus Fig. 1 in einer perspektivischen Ansicht, wobei der Schlitten teilweise geschnitten dargestellt ist;
Fig. 5 den Teil der Linearführung aus Fig. 4 in einer geschnittenen Seitenansicht; und
Fig. 6 eine schematische Darstellung der Vorrichtung gemäss Fig. 1 in einer geschnittenen Seitenansicht.

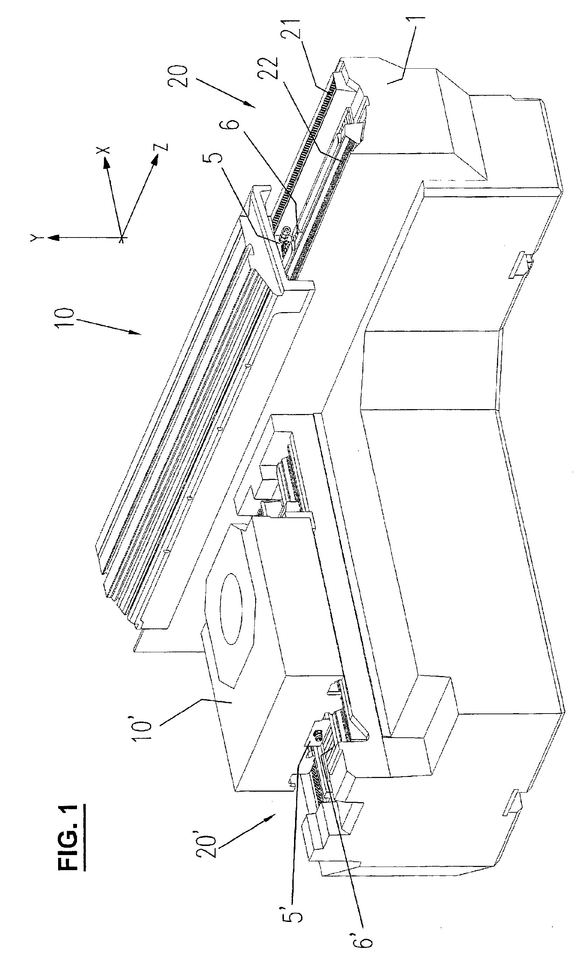

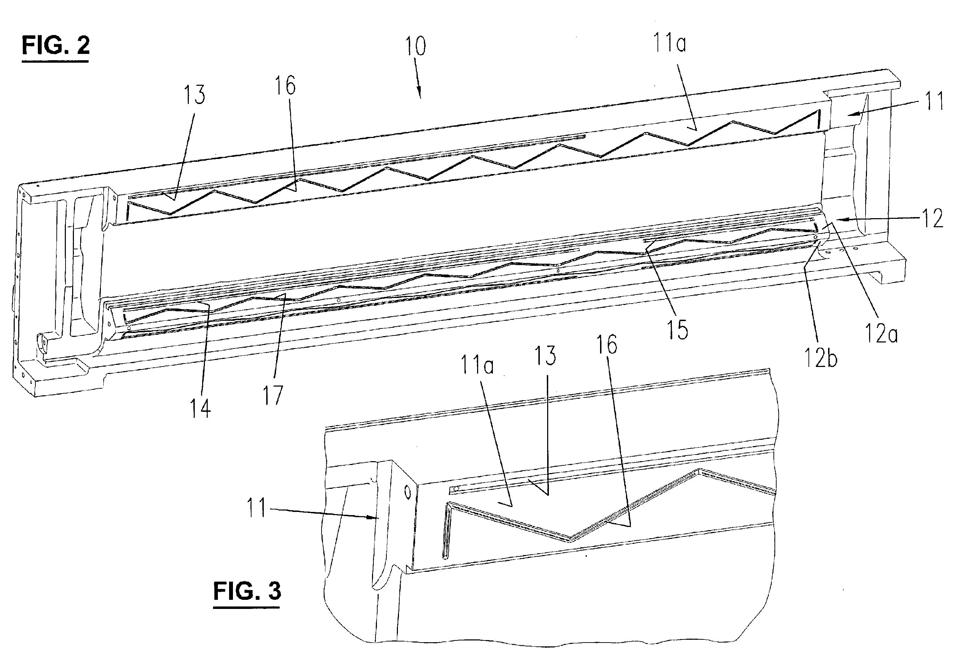

Fig. 1 zeigt eine Vorrichtung mit einem Maschinenbett 1, auf welchem ein Schlitten 10 angeordnet ist. Dieser ist in einer Achse verfahrbar, hier der Z-Achse, wobei seine Bewegungsbahn durch eine Linearführung 20 gegeben ist. Im vorliegenden Beispiel ist die Linearführung 20 als aufliegende Führung ausgestaltet, d.h. sie ist frei von Umgriffen, beispielsweise - wie auch aus Fig. 2 ersichtlich - in Form einer V-Flachführung. Es sind auch andere Führungen denkbar, z. B. nur eine V-Führung oder nur eine Flachführung.

Die Linearführung 20 umfasst zwei Führungsprofile 21 und 22, die sich in Richtung der Verfahrachse Z erstrecken. Das jeweilige Führungsprofil 21, 22 ist beispielsweise so ausgebildet, dass es im Maschinenbett integriert ist oder in Form einer separaten Schiene am Maschinenbett angebracht ist. Zwischen den Führungsprofilen 21, 22 ist ein Schlittenantrieb 5, 6 zum Bewegen des Schlittens 10 angeordnet. Im vorliegenden Beispiel ist der Schlittenantrieb 5, 6 in Form eines Linearmotors ausgebildet. Dieser enthält ein Primärteil 5, das an der Unterseite des Schlittens 10 angebracht ist und die elektrischen Wicklungen enthält, sowie ein Sekundärteil 6, das sich zwischen den Führungsprofilen 21, 22 in Richtung der Verfahrachse Z erstreckt und mit Permanentmagneten versehen ist. Durch geeignetes Bestromen der Wicklungen im Primärteil 5 ist ein Wanderfeld erzeugbar, das einen Schub vom Primärteil 5 auf das Sekundärteil 6 ausübt und so den Schlitten 10 in Bewegung versetzt. Um die Wärme, welche der Linearmotor 5, 6 während des Betriebs erzeugt, wirksam abzuführen, kann ein Kühlsystem mit einer zirkulierenden Kühlflüssigkeit eingesetzt werden, die in Kontakt mit dem Primärteil 5 und/oder Sekundärteil 6 bringbar ist.

Anstelle eines Linearmotors 5, 6 sind auch andere Antriebe denkbar, um den Schlitten 10 zu verfahren, z. B. ein rotatorischer Antrieb, beispielsweise ein solcher mit einer Kugelgewindespindel.

Fig. 2 zeigt die Unterseite des Schlittens 10, wobei das Primärteil 5 des Schlittenantriebs weggelassen ist. Der Schlitten 10 weist zwei Führungsprofile 11 und 12 auf, die aus der Unterseite des Schlittens 10 herausragen und die beim Verfahren entlang der Führungsprofile 21 bzw. 22 gleiten. Das erste Führungsprofil 11 weist eine Gleitebene 11a auf, in welche Vertiefungen 13, 16 eingearbeitet sind (vgl. auch die Detailansicht in Fig. 3). Die erste Vertiefung 13 erstreckt sich in der Verfahrachse Z und dient als Tasche zur Bildung einer hydrostatisch entlastenden Gleitführung. Die zweite Vertiefung 16 verläuft zwischen der Tasche 13 und dem inneren Rand des Führungsprofils 11 zickzackförmig entlang der Gleitebene 11a. Die zweite Vertiefung 16 dient als Schmiernut zur Bildung einer hydrodynamischen Gleitführung.

Das zweite Führungsprofil 12 weist zwei Gleitebenen 12a und 12b auf, die entsprechend der V-Form des Führungsprofils 22 unter einem Winkel geneigt angeordnet sind, und sind jeweils ähnlich wie die Gleitebene 11a mit Vertiefungen 14, 15, 17 versehen. Die in der Gleitebene 12a bzw. 12b gebildeten Vertiefungen 14 und 15 erstrecken sich in der Verfahrachse Z, wobei sie in einer Flucht angeordnet sind, und dienen zur Bildung von hydrostatischen Taschen ähnlich wie die Tasche 13 am ersten Führungsprofil 11. Die in der Gleitebene 12a bzw. 12b gebildete Vertiefung 17 hat einen zickzackförmigen Verlauf entlang der Gleitebene 12a bzw. 12b und dient als Schmiernut ähnlich wie die Schmiernut 16 am ersten Führungsprofil 11.

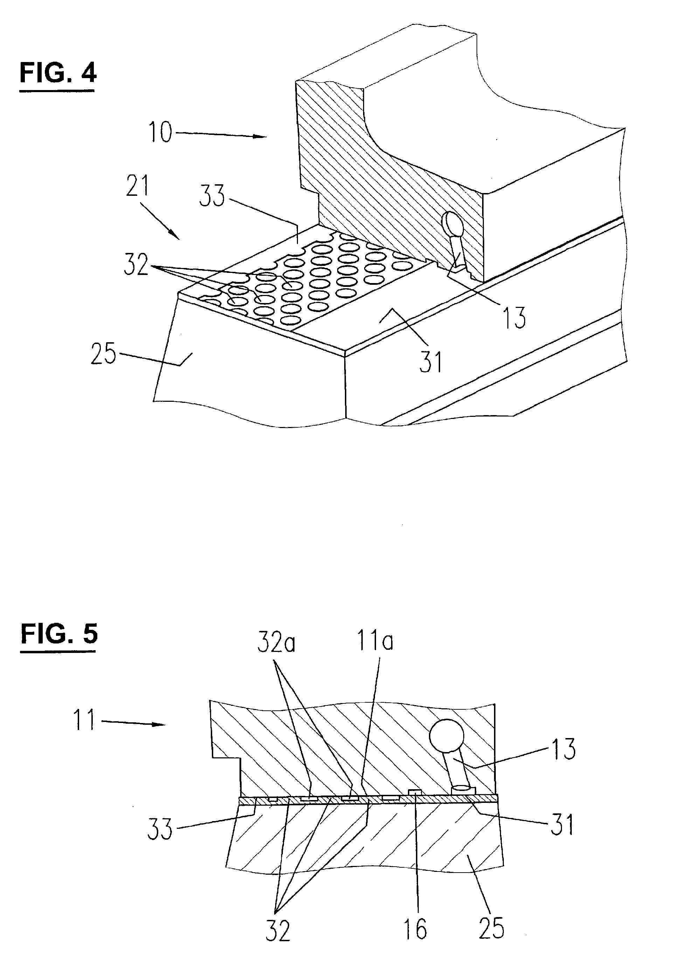

Fig. 4 zeigt eine Detailansicht des Schlittens 10, welcher auf der am Ständer 25 angeordneten Führungsprofil 21 aufliegt. Diese weist eine Führungsbahn auf, die im Wesentlichen horizontal verläuft und einen ersten Führungsbahnteil 31, einen zweiten Führungsbahnteil 32 und einen dritten Führungsbahnteil 33 umfasst.

Die Führungsbahnteile 31-33 sind im Wesentlichen eben ausgebildet und weisen einen Gleitbahnbelag auf, der unterschiedlich strukturiert ist.

Der erste Führungsbahnteil 31, welcher geschlossen ausgebildet ist und sich in ununterbrochener Weise entlang des Randes des Ständers 25 erstreckt, dient als Abschluss der Tasche 13 am Schlitten 10, wie dies auch in Fig. 5 ersichtlich ist. Schmiermittel ist über eine Zuleitung und geeignete Bohrungen im Schlitten 10 in die Tasche 13 leitbar und dort unter Druck setzbar.

Der zweite Führungsbahnteil 32 ist unterbrochen ausgebildet, indem Inseln vorgesehen sind. Die Inseln 32 können auch eine andere Form als der hier gezeigten Noppen haben. So ist es z. B. denkbar, dass einzelne oder alle Inseln 32 mit dem ersten Führungsbahnteil 31 und/oder dem dritten Führungsbahnteil 32 verbunden sind. Die Inseln 32 sind von einer Vertiefung 32a zur Aufnahme von Schmiermittel umgeben (vgl. Fig. 5). Der zweite Führungsbahnteil 32 dient als Abschluss des Teils der Gleitebene 11a, in welcher die Schmiernut 16 verläuft.

Der dritte Führungsbahnteil 33 ist geschlossen ausgebildet und erstreckt sich in ununterbrochener Weise entlang des Randes des Ständers 25. Die beiden Führungsbahnteile 31 und 33 bilden einen seitlichen Abschluss, so dass Schmiermittel seitlich nicht austreten kann.

Das V-förmige Führungsprofil 22 ist entsprechend dem in Fig. 4 gezeigten Führungsprofil 21 aufgebaut, indem die beiden Flanken des Führungsprofils 22 jeweils zwei Führungsbahnteile in der Art der Führungsbahnteile 31 und 33 und ein dazwischen angeordneter, strukturierter Führungsbahnteil in der Art des Führungsbahnteils 32 aufweisen.

Die Führungsbahn 31-33 ist aus verschleissarmen Material, z. B. Kunststoff gefertigt. Die Vertiefungen 13-17 sind bei der Fertigung des Schlittens 10 z. B. durch Fräsen und/oder Abgiessen einarbeitbar.

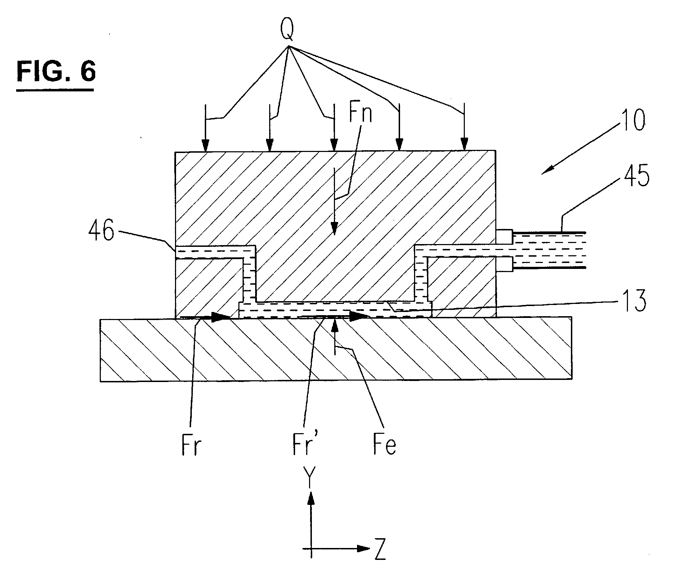

Die Funktionsweise der oben beschriebenen Linearführung 20 wird nun nachfolgend anhand von Fig. 5 sowie der schematischen Darstellung in Fig. 6 erläutert. Da die beiden Führungen 11, 21 sowie 12, 22 gleich funktionieren, wird hier der Einfachheit halber nur die Wirkungsweise der einen Führung 11, 21 erläutert.

Auf den Schlitten 10 wirkt eine gegen die Führung 11, 21 gerichtete Normalkraft Fn. Diese ergibt sich aus der Gewichtskraft, welche von der Masse des Schlittens 10 und von der zusätzlich auf diesen wirkenden Last Q herrührt, sowie aus einer zusätzlichen Vorspannung. Im vorliegenden Beispiel wird diese zusätzliche Vorspannung durch die Anzugskraft des als Linearmotor ausgebildeten Schlittenantriebs 5, 6 erzeugt. Eine zusätzliche Vorspannung kann auch durch andere Mittel bereitgestellt werden, beispielsweise durch Vorsehen von weiteren hydrostatischen Taschen, die in Richtung der Gewichtskraft wirken.

Zum Betrieb des Schlittens 10 ist die Tasche 13 mit einem fluiden Schmiermittel, z. B. einem Schmieröl, gefüllt und dieses unter Druck gesetzt. Es entsteht dadurch eine Entlastungskraft Fe, welche entgegen der Normalkraft Fn wirkt und den Schlitten 10 entlastet Die Flächenpressung wird dadurch minmiert. Tasche 13 und Führungsbahnteil 31 bilden somit eine hydrostatisch entlastete Gleitführung. In diesem Bereich der Führung wird beim Verfahren des Schlittens 10 lediglich Reibung im Schmiermittel erzeugt. Die entsprechende Reibungskraft Fr' ist dabei vernachlässigbar klein, d. h. Fr' ≈ 0.

Fluides Schmiermittel ist ebenfalls zwischen den beiden Führungsbahnteilen 31 und 33 zugesetzt. Der Schlitten 10 steht über die Gleitebene 11a in Kontakt mit dem zweiten Führungsbahnteil 32. Die Verteilung des Schmiermittels in der Vertiefung 32a des Führungsbahnteils 32 wird beim Verfahren des Schlittens 10 durch die Schmiernut 16 unterstützt. Insgesamt bilden die Gleitebene 11a und der Führungsbahnteil 32 eine hydrodynamische Gleitführung. In diesem Bereich der Führung wird Reibung primär zwischen den Flächen 11a und 32, die starr sind, erzeugt. Die entsprechende Reibungskraft Fr ist durch die Differenz zwischen der Normalkraft Fn und der Entlastungskraft Fe gegeben: Fr = µ· (Fn-Fe), wobei µ der Reibungskoeffizient ist.

Insgesamt wirkt aufgrund der hydrostatischen und hydrodynamisch unterstützen Gleitführung 11a, 13, 31, 33 auf den Schlitten 10 eine gesamte Reibungskraft F von F = Fr' + Fr ≈ µ · (Fn-Fe).

Um eine saubere Entlüftung der Taschen 13-15 zu gewährleisten, ist es denkbar, am Schlitten 10 Düsen und/oder Drosseln vorzusehen, welche einen kontinuierlichen Durchfluss an Schmiermittel durch die Taschen 13.15 ermöglichen. Dadurch kann Luft, welche sich z. B. aufgrund einer längeren Standzeit in den Taschen 13-15 befindet, abgeführt werden. Die Düsen und/oder Drosseln sind so zu wählen, dass der Durchfluss möglichst klein ist und so sich ein genügend grosser Schmiermitteldruck in den Taschen 13-15 aufbauen kann.

In Fig. 6 ist schematisch die Tasche 13 gezeigt, welche fluidisch einerseits mit einer Zuleitung 45 und anderseits mit einem Abfluss 46 verbunden ist. Die Zuleitung 45 ist mit externen Mitteln zum Erzeugen des Schmiermitteldruckes verbunden.

Zusammenfassend gesagt, funktioniert die hier beschriebene Linearführung 20 nach dem Prinzip einer hydrodynamischen Führung mit hydrostatischer Entlastung. Durch die Druckbeaufschlagung der Entlastungstaschen 13-15 wird die Normalkraft Fn und somit die Reibungskraft Fr zwischen dem Schlitten 10 und dem Führungsbahnteil 32 verringert.

Die Linearführung 20 ist als statisches System so ausbildbar, dass die Entlastung konstant bleibt, wenn sie einmal eingestellt ist. Die Grösse der Entlastungskraft Fe wird entsprechend der minimal vorgesehenen Last Q so ausgelegt, dass die Führungsqualitäten und ein gewünschtes Mass an Steifigkeit erhalten bleiben. Ist die Führung 20, wie im vorliegenden Beispiel, als aufliegende Führung ausgebildet, so ist u. a. zu gewährleisten, dass der Schlitten 10 auch bei der minimalen Last Q noch sicher auf den Führungsprofilen 21, 22 aufliegt.

Das Mass an Entlastung ist durch verschiedene Parameter festlegbar, wie die Anzahl, Länge und Breite der Taschen 13-15 und ihre Position am Schlitten 10 sowie den Schmiermitteldruck in den Taschen 13-15. Je nach Wahl dieser Parameter können Bereiche unterschiedlich entlastet werden. Dies ist z. B dann erforderlich, wenn das Lastprofil Q asymmetrisch ist, dies im Gegensatz zum in Fig. 6 gezeigten Fall, wo die Pfeile Q ein konstantes Lastprofil angeben.

Das Vorsehen der hier beschriebenen Linearführung 20 hat u. a. den Vorteil, dass ein Schlitten 10 präzise an eine bestimmte Position verfahren und dort gehalten werden kann. So wurde festgestellt, dass die aufgrund der Linearführung 20 erzeugte Reibungskraft Fr dämpfend auf Störgrössen wirkt. Diese können intern verursacht sein, z. B. durch eine zeitliche Änderung der Last auf den Schlitten 10, oder extern, z. B. durch Vibrationen am Boden. Aufgrund der Dämpfung haben diese Störgrössen keinen Einfluss auf eine Positionsveränderung des Schlitten 10. Es ist daher u. a. einfacher, die Vorrichtung so zu regeln, dass der Schlitten 10 an einer bestimmten Position gehalten wird.

Das Vorsehen einer Linearführung als Kombination aus einer hydrodynamischen Führung und einer hydrostatischen Führung hat auch den Vorteil, dass die Linearführung eine verbesserte Steifigkeit sowie eine verbesserte Bahngenauigkeit aufweist, insbesondere wenn die Führungslänge gross ist.

Ist ein Linearmotor 5, 6 als Schlittenantrieb vorgesehen, so ist durch die Linearführung 20 ein präziser Abstand zwischen den beiden Teilen 5 und 6 gewährleistet und ein präzises Positionieren des Schlittens 10 möglich. Im Weiteren sind mittels des Linearmotors 5, 6 hohe Geschwindigkeiten und Beschleunigungen erzeugbar und so schnelle Bewegungen des Schlittens 10 möglich.

Die Linearführung 20 ist vielseitig einsetzbar, insbesondere bei Maschinen, welche zur Bearbeitung von Werkstücken, z. B. durch Schleifen, ausgelegt sind. Im Beispiel gemäss Fig. 1 ist z. B. auf dem Schlitten 10 eine Werkstückhalterung anbringbar, welche beispielsweise einen Werkstückspindelstock und einen Reitstock aufweist. In Fig. 1 ist ein weiterer Schlitten 10' gezeigt, welcher in der X-Achse verfahrbar ist, wobei die Führung 20' so wie die Linearführung 20 ausgebildet ist. Zum Antrieb dient z. B. ein Linearmotor 5', 6', der ähnlich wie der Linearmotor 5, 6 aufgebaut ist. Auf dem zweiten Schlitten 10' ist z. B. eine rotierbare Schleifscheibe anbringbar. Die Vorrichtung gemäss Fig. 1 ist somit als Einsatz bei der Schleifmaschine, insbesondere Rundschleifmaschine, geeignet, um Werkstücke präzise bearbeiten zu können.

Aus der vorangehenden Beschreibung sind dem Fachmann zahlreiche Abwandlungen zugänglich, ohne den Schutzbereich der Erfindung zu verlassen, der durch die Ansprüche definiert ist.

So ist u. a. die genaue geometrische Ausführung der Linearführung 20, 20' anpassbar. Beispielsweise kann sie anstelle der hier gezeigten V-Flachführung als reine V-Führung, als reine Flachführung oder auch als Führung mit einer anderen geometrischen Form ausgebildet sein.

Weiter ist es denkbar, den inselförmigen Führungsbahnteil 32 am Schlitten 10 vorzusehen und den Bereich zwischen den beiden Führungsbahnteilen 31 und 33 in Form der Gleitebene 11a auszubilden. In dieser ist eine Schmiernut in der Form der Schmiernut 16 vorsehbar.

## Patentansprüche

1. Vorrichtung mit
einem verfahrbaren Schlitten (10; 10') und mit
einer Linearführung (20; 20') zum Führen des Schlittens (10; 10'), welche zur Bildung einer ersten Gleitführung (13, 14, 15, 31) einen ersten Führungsbahnteil (31) und zur Bildung einer zweiten Gleitführung (11a, 12a, 12b, 32) einen zweiten Führungsbahnteil (32) aufweist, wobei
der zweite Führungsbahnteil (32) einen inselförmigen Belag aufweist zur Erzeugung einer auf den Schlitten (10; 10') wirkenden Reibungskraft (Fr), **dadurch gekennzeichnet, dass** der Schlitten (10; 10') zur Bildung der ersten Gleitführung mindestens eine Tasche (13, 14, 15) aufweist, welche entlang dem ersten Führungsbahnteil (31) gleiten kann und in welche Schmiermittel unter Druck aufnehmbar ist zur Erzeugung einer auf den Schlitten (10; 10') wirkenden Entlastungskraft (Fe), und dass der zweite Führungsbahnteil (32) so angeordnet ist, dass die erste Gleitführung (13, 14, 15, 31), wenn zur Erzeugung der Entlastungskraft (Fe) Druckmittel in der mindestens einen Tasche (13, 14, 15) aufgenommen ist, die zweite Gleitführung (11a, 12a, 12b, 32) entlastet.

2. Vorrichtung nach Anspruch 1, welche Vorspannmittel (5, 6; 5', 6') aufweist, mittels welchen zusätzlich zu der durch den Schlitten (10; 10') erzeugten Gewichtskraft eine Vorspannung auf die Linearführung (20; 20') erzeugbar ist.

3. Vorrichtung nach einem der vorangehenden Ansprüche, welche einen Linearmotor (5, 6; 5', 6') als Antrieb zum Verfahren des Schlittens (10; 10') umfasst.

4. Vorrichtung nach einem der vorangehenden Ansprüche, wobei der zweite Führungsbahnteil (32) entlang dem ersten Führungsbahnteil (31), der eine geschlossene Fläche aufweist, und/oder entlang einem dritten Führungsbahnteil (33) verläuft, der eine geschlossene Fläche aufweist.

5. Vorrichtung nach einem der vorangehenden Ansprüche, wobei die Linearführung (20; 20') zur Bildung der zweiten Gleitführung eine Gleitebene (11a, 12a, 12b) aufweist, die gegenüberliegend zum zweiten Führungsbahnteil (32) angeordnet ist und die vorzugsweise mindestens eine Schmiernut (16, 17) aufweist.

6. Vorrichtung nach Anspruch 5, wobei die Schmiernut (16, 17) zickzackförmig entlang der Gleitebene (11a, 12a, 12b) verläuft.

7. Vorrichtung nach einem der vorangehenden Ansprüche, wobei der erste Führungsbahnteil (31) und der zweite Führungsbahnteil (32) im Wesentlichen parallel zueinander, vorzugweise in einer im Wesentlichen selben Ebene angeordnet und/oder relativ zueinander bewegbar sind.

8. Vorrichtung nach einem der vorangehenden Ansprüche, wobei der inselförmige Belag in Form von Noppen (32) ausgebildet ist.

9. Vorrichtung nach einem der vorangehenden Ansprüche, wobei der Schlitten (10; 10') ein Entlüftungsloch (46) aufweist, aus welchem Schmiermittel aus der mindestens einen Tasche (13, 14, 15) austreten kann.

10. Vorrichtung nach einem der vorangehenden Ansprüche, wobei der Schlitten (10; 10') zwei Führungsprofile (11, 12) aufweist, die jeweils mindestens eine Tasche (13, 14, 15) aufweisen.

11. Vorrichtung nach einem der vorangehenden Ansprüche, wobei der Schlitten (10; 10') in der Horizontalen (X; Z) verfahrbar ist.

12. Vorrichtung nach einem der vorangehenden Ansprüche, wobei die Linearführung (20; 20') eine aufliegende Führung ist und/oder zwei Führungsprofile (21, 22) aufweist, die jeweils als Flachführung (21) oder V-Führung (22) ausgebildet sind.

13. Schleifmaschine, insbesondere Rundschleifmaschine, mit einer Vorrichtung nach einem der vorangehenden Ansprüche.

14. Verwendung einer Vorrichtung nach einem der Ansprüche 1 bis 12 und/oder einer Schleifmaschine nach Anspruch 13 zum Bearbeiten eines Werkstücks.

## Claims

1. A device with
a displaceable carriage (10; 10') and
a linear guide (20; 20') for guiding the carriage (10; 10'), which comprises a first guide path part (31) to form a first slideway (13, 14, 15, 31) and a second guide path part (32) to form a second slideway (11a, 12a, 12b, 32), wherein
the second guide path part (32) comprises an island-shaped surface to create a frictional force (Fr) acting on the carriage (10; 10'), **characterized in that**
the carriage (10; 10') comprises at least one pocket (13, 14, 15) to form the first slideway, which pocket can slide along the first guide path part (31) and in which pocket lubricant can be held under pressure to create a relieving force (Fe) acting on the carriage (10; 10'), and **in that**
the second guide path part (32) is arranged in such a way that, when a pressure medium is held in the at least one pocket (13, 14, 15) to create the relieving force (Fe), the first slideway (13, 14, 15, 31) relieves the second slideway (11a, 12a, 12b, 32).

2. Device according to claim 1, which comprises preloading means (5, 6; 5', 6') by means of which a preload on the linear guide (20; 20') can be produced in addition to the weight force created by the carriage (10; 10').

3. Device according to any one of the preceding claims, which comprises a linear motor (5, 6; 5', 6') as a drive for displacing the carriage (10; 10').

4. Device according to any one of the preceding claims, wherein the second guide path part (32) runs along the first guide path part (31), which includes a closed surface, and/or along a third guide path part (33), which includes a closed surface.

5. Device according to any one of the preceding claims, wherein the linear guide (20; 20') comprises a slide plane (11a, 12a, 12b) to form the second slideway, the slide plane being arranged opposite the second guide path part (32) and preferably comprising at least one lubrication groove (16, 17).

6. Device according to claim 5, wherein the lubrication groove (16, 17) runs in a zigzag pattern along the slide plane (11a, 12a, 12b).

7. Device according to any one of the preceding claims, wherein the first guide path part (31) and the second guide path part (32) are arranged substantially parallel to one another, preferably in substantially the same plane and/or are movable relative to one another.

8. Device according to any one of the preceding claims, wherein the island-shaped surface is designed in the form of nubs (32).

9. Device according to any one of the preceding claims, wherein the carriage (10; 10') comprises a vent hole (46) out of which lubricant can escape from the at least one pocket (13, 14, 15).

10. Device according to any one of the preceding claims, wherein the carriage (10; 10') comprises two guide profiles (11, 12), each of which includes at least one pocket (13, 14, 15).

11. Device according to any one of the preceding claims, wherein the carriage (10; 10') can travel in the horizontal (X; Z).

12. Device according to any one of the preceding claims, wherein the linear guide (20; 20') is a guide freely supported and/or comprises two guide profiles (21, 22), each of which is designed as a flat guide (21) or as a V guide (22).

13. A grinding machine, in particular a cylindrical grinding machine, comprising a device according to any one of the preceding claims.

14. Use of a device according to any one of claims 1 to 12, and/or a grinding machine according to claim 13 for machining a workpiece.

## Revendications

1. Dispositif comprenant
un chariot (10; 10') déplaçable et
un guidage linéaire (20; 20') pour guider le chariot (10; 10'), lequel comprend une première partie de glissière de guidage (31) pour former un premier guidage à glissement (13, 14, 15, 31) et une deuxième partie de glissière de guidage (32) pour former un deuxième guidage à glissement (11a, 12a, 12b, 32),
la deuxième partie de glissière de guidage (32) présentant un revêtement en forme d'île afin de produire une force de frottement (Fr) agissant sur le chariot (10; 10'), **caractérisé en ce que**
le chariot (10; 10') comporte, afin de former le premier guidage à glissement, au moins une poche (13, 14, 15) pouvant glisser le long de la première partie de glissière de guidage (31) et pouvant recevoir un lubrifiant sous pression afin de produire une force de décharge (Fe) agissant sur le chariot (10; 10'), et que
la deuxième partie de glissière de guidage (32) est agencée de telle manière que lorsque le milieu sous pression est reçu dans ladite au moins une poche (13, 14, 15) pour produire ladite force de décharge (Fe), le premier guidage à glissement (13, 14, 15, 31) décharge le deuxième guidage à glissement (11a, 12a, 12b, 32).

2. Dispositif selon la revendication 1, comprenant des moyens de prétension (5, 6; 5', 6') permettant de produire, en plus de la force résultant du poids du chariot (10; 10'), une prétension agissant sur le guidage linéaire (20, 20').

3. Dispositif selon l'une des revendications précédentes, comprenant un moteur linéaire (5, 6; 5', 6') en tant qu'entraînement pour le déplacement du chariot (10; 10').

4. Dispositif selon l'une des revendications précédentes, où la deuxième partie de glissière de guidage (32) s'étend le long de la première partie de glissière de guidage (31) qui présente une surface fermée et/ou le long d'une troisième partie de glissière de guidage (33) qui présente une surface fermée.

5. Dispositif selon l'une des revendications précédentes, où le guidage linéaire (20; 20') présente pour former le deuxième guidage à glissement un plan de glissement (11a, 12a, 12b) agencé en face de la deuxième partie de glissière de guidage (32) et préférablement muni d'au moins une rainure de graissage (16, 17).

6. Dispositif selon la revendication 5, où la rainure de graissage (16, 17) s'étend en zigzag le long du plan de glissement (11a, 12a, 12b).

7. Dispositif selon l'une des revendications précédentes, où la première partie de glissière de guidage (31) et la deuxième partie de glissière de guidage (32) sont agencées substantiellement parallèlement, préférablement substantiellement dans un même plan et/ou déplaçables l'une par rapport à l'autre.

8. Dispositif selon l'une des revendications précédentes, où le revêtement en forme d'île est réalisé sous la forme de boutons (32).

9. Dispositif selon l'une des revendications précédentes, où le chariot (10; 10') présente un trou d'échappement (46) permettant l'échappement du lubrifiant de ladite au moins une poche (13, 14, 15).

10. Dispositif selon l'une des revendications précédentes, où le chariot (10; 10') comporte deux profilés de guidage (11, 12) présentant chacun au moins une poche (13, 14, 15).

11. Dispositif selon l'une des revendications précédentes, où le chariot (10; 10') est déplaçable en direction horizontale (X; Z).

12. Dispositif selon l'une des revendications précédentes, où le guidage linéaire (20; 20') est un guidage sus-jacent et/ou comprend deux profilés de guidage (21, 22) réalisés respectivement sous la forme d'un guidage plat (21) ou d'un guidage en V (22).

13. Rectifieuse, plus particulièrement une rectifieuse cylindrique, comprenant un dispositif selon l'une des revendications précédentes.

14. Utilisation d'un dispositif selon l'une des revendications 1 à 12 et/ou d'une rectifieuse selon la revendication 13 pour usiner une pièce.
